# NEW EUROPEAN PATENT SPECIFICATION

(11) **EP 0 514 784 B2**
(45) Date of publication and mention of the opposition decision: **05.10.2005**
(45) Mention of the grant of the patent: 16.08.2001
(21) Application number: 92108230.1
(22) Date of filing: 15.05.1992
(51) Int. Cl.: C08K 5/13, C08J 3/22

(54) **Process for granulating additives for organic polymers**
Verfahren zur Granulierung von Additiven für organische Polymere
Procédé de granulation des additifs pour polymères organiques

(30) Priority: 17.05.1991 IT MI911354
(43) Date of publication of application: 25.11.1992
(73) Proprietor: Great Lakes Chemical (Europe) GmbH, 8500 Frauenfeld (CH)
(72) Inventor: Neri, Carlo, Dr., I-20097 San Donato Milanese, Milan (IT); Pallini, Luciano, Dr., I-20097 San Donato Milanese, Milan (IT)
(74) Representative: Akers, Noel James

(56) References cited:
- EP-A1- 0 255 743
- EP-A1- 0 392 392
- EP-A2- 0 278 579
- GB-A- 2 025 980
- JP-A- 59 104 348
- US-A- 4 446 086
- CHEMICAL ABSTRACTS, vol. 106, no. 10, 9 March 1987 (1987-03-09), Columbus, Ohio, US; abstract no.: 68211g, L.V. GLUSHKOVA ET AL: "Phase states of Fenozan 23 and its preparation in a dust-free final form" page 39 XP002977790 & GLUSHKOVA ET AL: "Phase states of Fenozan 23 and its preparation in a dust-free final form" PLASTICHESKIE MASSY, vol. 12, 1986, pages 9-10, 1986 ISSN: 0554-2901

## Description

The present invention relates to procedures for granulating powdered additives for organic polymers.

More in particular, the present invention relates to a process for granulating powdery organic and/or inorganic antiacid additives for polymers in the presence of tetrakis-[3-(3,5-di-tert.-butyl-4-hydroxyphenyl)-propionyloxymethyl]-methane and to a process for granulating powdery tetrakis-[3-(3,5-di-tert.-butyl-4-hydroxyphenyl)-propionyloxymethyl]-methane.

The present invention also relates to granular forms of organic and/or inorganic antiacid additives for polymers and/or of tetrakis-[3-(3,5-di-tert.-butyl-4-hydroxyphenyl)-propionyloxymethyl]-methane, obtainable by the above procedures, and to the use of such granular forms in the stabilization of organic polymers.

Organic polymers, in particular polyolefins, require the addition of additives suitable for neutralizing the acidic residues deriving from the polymerization catalysts during their processing. They furthermore require the addition of stabilizers against the oxidative degradation caused by light and/or heat.

One class of antioxidant additives are the sterically hindered phenols, such as tetrakis-[3-(3,5-di-tert.-butyl-4-hydroxyphenyl)-propionyl-oxymethyl]-methane.

Both the antiacid additives and tetrakis-[3-(3,5-di-tert.-butyl-4-hydroxyphenyl)-propionyl-oxymethyl]-methane usually are in powder form.

EP-A-0255743 discloses a process for preparing beads of about 5mm of size of amorphous tetrakis-[3-(3,5-ditert.-butyl-4-hydroxyphenyl)-propionyloxymethyl]methane by melting crystalline tetrakis-[3-(3,5-di-tert.-butyl-4-hydroxy phenyl)-proplonyl-oxymethyl]methane at 140°C and cooling the melt by dropping it into deionized water at room temperature. Amorphous tetrakis-[3-(3,5-di-tert.-butyl- 4-hydroxyphenyl)-propionyl-oxymethyl]methane is used as stabilizer for organic polymers.

EP-A-0392392 discloses crystalline tetrakis-[3-(3,5-di-tert.-butyl- 4-hydroxyphenyl)-propionyl-oxymethyl] methane in a stabilizer mixture which is heated up to 200° C.

When said powders are used during the processing of the polymers, they display the drawback of showing a tendency to disperse in air, thereby causing damage to the health of the operators and creating safety risks due to the possibility of explosions.

Another disadvantage associated with the use of these additives in powdery form is their tendency to agglomerate inside the feed hoppers, resulting in an uneven metering of the additives to the polymers to be compounded.

On the other hand, the use of antiacid additives and tetrakis-[3-(3,5-di-tert.-butyl-4-hydroxyphenyl)-propionyloxymethyl]-methane in the stabilization of organic polymers poses difficulties as regards the obtainment of a complete homogenization of the mixtures of said additives and, consequently, of their mixtures with the organic polymer. This results in an ununiform stabilization.

In order to overcome the above drawbacks, attempts have been made in the past to granulate these additive powders, either as individual compounds or as blends thereof, so as to obtain granulates which can easily be handled and metered.

For that purpose, granulation systems have been resorted to which use dry-compacting machines or dry pelletizers. Unfortunately, in mostcases, these procedures proved to be poorly effective, because the resulting granules showed a low mechanical strength and were difficult to handle, owing to their tendency to crumble.

As an alternative, binding agents can be used, such as waxes, paraffins and, stearic acid amides. However, in that case undesired components are added to the polymer.

It has now been found that the drawbacks of the prior art processes can be avoided by means of the improved granulation procedures according to the present invention which afford granules with improved mechanical strength without making necessary the addition of foreign compounds to the stabilizer formulation.

Furthermore, said procedures make it possible to obtain granules of the above stabilizer compositions which display a high level of homogeneity.

Therefore, the present invention provides a process for granulating powdery organic and/or inorganic antiacid additives for polymers in the presence of tetrakis-[3-(3,5-di-tert.-butyl-4-hydroxyphenyl)-propionyl-oxymethyl]-methane, wherein said tetrakis-[3-(3,5-di-tert.-butyl-4-hydroxyphenyl)-propionyl-oxymethyl)-methane is present in both amorphous and crystalline form with the crystalline form prevailing over the amorphous form in the granulated product, by using pressure and/or heat,
characterized in that
the tetrakis-[3-(3,5-di-tert.-butyl-4-hydroxyphenyl)-propionyl-oxymethyl]-methane Is present in its amorphous form in an amount, being at least equal to the weight percentage required to be in the molten state or
if exclusively crystalline tetrakis-[3-(3,5-di-tert.-butyl-4-hydroxyphenyl)-propionyl-oxymethyl]-methane is used the process is carried out at a temperature of about 110°C to 125°C, and
the granulation is carried out in the presence of at least 1% by weight of said tetrakis-[3-(3,5-di-tert.-butyl-4-hydroxyphenyl)-propionyl-oxymethyl]-methane in the molten state, based on the weight of the powder mixture to be granulated, homogeneously distributed throughout the powder mass.

Moreover, the invention provides a process for granulating powdery tetrakis-[3-(3,5-di-tert.-butyl-4-hydroxyphenyl)-propionyl-oxymethyl]-methane, wherein said tetrakis-[3-(3,5-di-tert.-butyl-4-hydroxyphenyl)-propionyl-oxymethyl]-methane is present in both amorphous and crystalline form with the crystalline form prevailing over the amorphous form in the granulated product, by using pressure and/or heat,
characterized in that
the tetrakis-[3- (3,5-di-tert.-butyl-4-hydroxyphenyl)-propionyl-oxymethyl]-methane is present in its amorphous form in an amount, being at least equal to the weight percentage required to be in the molten state or
if exclusively crystalline tetrakis-[3-(3,5-di-tert.-butyl-4-hydroxyphenyl)-propionyl-oxymethyl]-methane is used the process is carried out at a temperature of about 110°C to 125°C, and
the granulation is carried out in the presence of at least 1% by weight of said tetrakis-[3-(3,5-di-tert.-butyl-4-hydroxyphenyl)-propionyl-oxymethyl]-methane in the molten state, based on the weight of the powder mixture to be granulated, homogeneously distributed throughout the powder mass.

Usually the amount of molten tetrakis-[3-(3,5-di-tert.-butyl-4-hydroxyphenyl)-propionyl-oxymethyl]-methane is at least equal to 5% by weight and preferably at least 10% by weight, based on the weight of the powder (mixture) to be granulated.

Tetrakis-[3-(3,5-di-tert.-butyl-4-hydroxyphenyl)-propionyl-oxymethyl]-methane has the formula: 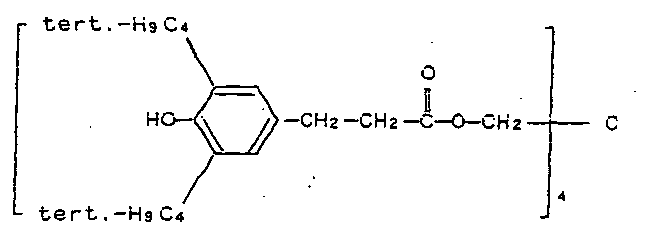 and is used in the art for the stabilization of organic polymers, as disclosed, e.g., in US-A-3,644,482.

Said compound can exist as crystalline solid in various allotropic forms showing melting temperatures within the approximate range of from 110°C to 125°C.

Besides the above crystalline forms, said compound can also exist in an amorphous form, as disclosed in US-A-4,886,900, having a glass transition temperature (T_{g}) within the range of from 40°C to 54°C and not showing any endothermal melting peaks within the temperature range of from about 50°C to 200°C. This amorphous form may be obtained, according to said patent, by rapid cooling of the molten compound.

According to one alternative of the procedures of the present invention, tetrakis-[3-(3,5-di-tert.-butyl-4-hydroxy-phenyl)-propionyl-oxymethyl]-methane is contained in the powder to be granulated In its amorphous form, in an amount which is at least 1, preferably at least 5, and more preferably at least 10% by weight.

Thus, by operating at temperatures which are higher than the T_{g} of amorphous tetrakis-[3-(3,5-di-tert.-butyl-4-hydroxyphenyl)-propionyl-oxymethyl]-methane, but lower than the melting temperatures of the compound in its crystalline forms, said compound will be found in practically unchanged form in the granulated product.

In this case, the granulation of the powders can be carried out by means of a roller compacting machine, with rollers heated at the required temperature.

More advantageously, one can use a single-screw or double-screw extruder with zones heated at suitable temperatures, so as to produce continuous strands which can subsequently be cut. In that way, granules of different sizes can be obtained, depending on the diameter of the extrusion die.

In the case in which, on the contrary, exclusively crystalline tetrakis-[3-(3,5-di-tert.-butyl-4-hydroxyphenyl)-propionyl-oxymethyl]-methane is used, the present processes are carried out attemperatures of about 110°C to 125°C; the contact times are such that at least 1, preferably at least 5, and more preferably at least 10% by weight of that molten compound is present.

The amount of tetrakis-[3-(3,5-di-tert.-butyl-4-hydroxyphenyl]-propionyl-oxymethyl]-methane to be employed preferably ranges from 10 to 90% by weight, based on the total amount of powder (mixture) to be granulated.

The conventionally used antiacid additives are (metal) stearates, such as, e.g., calcium, zinc, magnesium and aluminium stearates; oxides, such as zinc and magnesium oxides; titanium dioxide; and synthetic or natural carbonates, such as calcium carbonate and hydrotalcite.

The above compounds are well known and commercially available. In particular, as regards hydrotalcite, a compound having the formula

Mg₆Al₂(OH)₁₆(CO₃)*4H₂O,

a product marketed by the company KYOWA under the trade name DHT4A may, for instance, be employed.

As amorpous tetrakis-[3-(3,5-di-tert.-butyl-4-hydroxyphenyl)-propionyl-oxymethyl]-methane, a product which is marketed by Enichem Synthesis under the trade name Anox® 20 AM can, for example, be used.

Examples of commercially available crystalline tetrakis-[3-(3,5-di-tert.-butyl-4-hydroxyphenyl)-propionyloxymethyl]-methane are the products Anox® 20 (Enichem Synthesis) and Irganox® 1010 (Ciba-Geigy).

The present invention also provides granular forms of organic and/or inorganic antiacid additives for polymers and/or of tetrakis-[3-(3,5-di-tert.-butyl-4-hydroxyphenyl)-propionyl-oxymethyl]-methane, obtainable by any one of the above processes, wherein said tetrakis-[3-(3,5-di-tert.-butyl-4-hydroxyphenyl)-propionyl-oxymethyl]-methane is present in both amorphous and crystalline form with the crystalline form prevailing over the amorphous form in the granulated product.

The granules obtained by means of the procedures according to the present invention show a satisfactory mechanical strength. Anyway, the small amounts of powders which may be formed when exerting mechanical stress, are free-flowing and dust-free. Therefore the above products can homogeneously be metered into the polymer

Furthermore, by properly selecting the relative amounts of powders, granules can be prepared which contain the antiacid additives and the antioxidant in the desired amounts and with a high level of homogeneity. Thus an extremely homogeneous distribution of the above additives throughout the polymer to be stabilized may be obtained without the need of introducing undesired compounds. Moreover, a dust-free operation is possible thereby.

Finally, the present invention provides the use of said granular forms in the stabilization of organic polymers.

The following examples are given for merely illustrative, non-limitative purposes.

### EXAMPLE 1

100 g of ANOX® 20 and 100 g of calcium stearate were charged to a planetary powder mixer. The homogenized mixture was fed to a BRABENDER extruder (screw length 475 mm, screw diameter 19 mm) with a compression ratio of 1:4 and four screw heating zones (optionally thermostatable at four different temperatures). The mixture was extruded through a circular die (diameter 25 mm) at a screw speed of 70 rpm and a constant temperature of 115°C.

A strand was obtained, which, after cooling down to room temperature was cut in order to obtain granules of approximately 2.5 mm in size.

The X-ray diffraction spectra of the granules showed that the latter were homogeneous and constituted by calcium stearate and tatrakis-[3-(3,5-di-tert.-butyl-4-hydroxyphonyl)-propionyl-oxymethyl]-methane in both amorphous and crystalline forms, with the crystalline form prevailing over the amorphous form. The product was dust-free.

### EXAMPLE 2

100 g of ANOX® 20, 20 g of previously ground ANOX® 20 AM and 100 g of calcium stearate were charged to a planetary powder mixer. The homogenized mixture was treated as described in example 1, with the only difference that the temperature was kept constant at 100°C.
Obtained was a product which was analogous to the product obtained in example 1.

### EXAMPLE 3

160 g of ANOX® 20 and 40 g of zinc stearate were charged to a planetary powder mixer. The homogenized mixture was treated as in example 1, with the only difference that the temperature of the extruder was adjusted at 110°C.

Obtained was a homogeneous product composed of zinc stearate and both amorphous and crystalline tetrakis-[3-(3,5-di-tert.-butyl-4-hydroxyphenyl)-propionyl-oxymethyl]-methane, with the crystalline form prevailing over the amorphous form. The product was dust-free.

### EXAMPLE 4

80 g of ANOX® 20, 80 g of calcium stearate and 40 g of zinc stearate were charged to a planetary powder mixer. The homogenized mixture was treated as described in example 1, with the only difference that the temperature profile of the extruder, from the feeding zone to the head zone, was 110°C, 110°C, 110°C and 115°C.

Obtained was a homogeneous product composed of calcium stearate, zinc stearate and both amorphous and crystalline tetrakis-[3-(3,5-di-tert.-butyl-4-hydroxyphenyl)-propionyl-oxymethyl]-methane, with the crystalline form prevailing over the amorphous form. The product was dust-free.

### EXAMPLE 5

100 g of ANOX® 20, and 100 g of zinc oxide were charged to a planetary powder mixer. The homogenized mixture was treated as described in example 1.

Obtained was a product composed of a homogeneous mixture of zinc oxide and both amorphous and crystalline tetrakis-[3-(3,5-di-tert.-butyl-4-hydroxyphenyl) -propionyl-oxymethyl]-methane, with the crystalline form prevailing over the amorphous form. The product was dust-free.

### EXAMPLE 6

100 g of ANOX® 20, and 100 g of hydrotalcite were charged to a planetary powder mixer. The homogenized mixture was treated as described in example 3.

Obtained was a product composed of a homogeneous mixture of hydrotalcite and both amorphous and crystalline tetrakis-[3-(3,5-di-tert.-butyl-4-hydroxyphenyl)-propionyl-oxymethyl]-methane, with the crystalline form prevailing over the amorphous form. The product was dust-free.

### EXAMPLE 7

180 g of ANOX® 20 and 20 g of previously ground ANOX® 20 AM were charged to a planetary powder mixer. The homogenized mixture was treated as described in example 1, with the only difference that the temperature was kept constant at 100°C.

Obtained was a product composed of a homogeneous mixture of amorphous and crystalline tetrakis-[3-(3,5-di-tert.-butyl-4-hydroxyphenyl)-propionyl-oxymethyl] -methane, with the crystalline form prevailing over the amorphous form. The product was dust-free.

### EXAMPLE 8

160 g of ANOX® 20 and 40 g of previously ground ANOX® 20 AM were charged to a planetary powder mixer. The homogenized mixture was treated as described in example 1, with the only difference that the temperature was kept constant at 100°C. Obtained was a product analogous to the product of example 7.

### EXAMPLE 9

200 g of ANOX® 20 were charged to a planetary powder mixer. The homogenized sample was treated as described in example 1, with the only difference that the temperature profile of the extruder, from the feeding zone to the head zone, was 110°C, 110°C, 110°C and 112°C.
Obtained was a product analogous to the product of example 7.

### EXAMPLE 10

In order to compare the mechanical properties of granules obtained according to the process of the present invention to those of products obtained by powder compaction, tests of crumbling resistance were carried out.

A machine for powder sieving ("Pulverisette" manufactured by the company FRITSCH, FRG) was used. This machine was equipped with five sieves of decreasing mesh size, from the top downward 2.80, 1.70, 1.00, 0.50 and 0.18 mm, and with a cover and a collecting bottom tray.

The machine performed the sieving operation by causing the sieve stack to vibrate. The vertical vibration stroke was 1.6 mm.

In order to cause the granules to undergo percussions, the sieving was carried out by charging to the first four sieves glass balls (diameter 17.3 mm, average weight 6.5 g). The number of balls charged to the sieves was: 11 balls to the first sieve (i.e., the 2.80 mm sieve), 10 balls to the second sieve (1.70 mm), 9 balls to the third sieve (1.00 mm) and 8 balls to the fourth sieve (0.50 mm).

The above test was carried out on samples obtained from examples 3, 4, 6 and 9 and additionally on a sample obtained by means of the compaction of powders of ANOX® 20 and zinc stearate (ratio 4:1, Product "A") and on a sample obtained by means of the compaction of ANOX® 20 powder (Product "B").

For each sample, 100 g of product were dry-sieved for 5 minutes, in the absence of glass balls, in order to determine the initial granulometric distribution. Then the balls were charged to the sieves and the determination of granulometric distribution was repeated after a 10- and 20-minutes sieving, respectively. The results are reported in Table I below.

From an examination of the results obtained it is evident that the products prepared by means of the process according to the present invention are endowed with a higher mechanical crumbling resistance than those obtained by compacting the powders. In fact, with the mechanical stress conditions being the same, the products according to the present invention give rise to a decidedly smaller amount of fine fractions ("dust").

### EXAMPLE 11

By using a powder planetary mixer, a sample of commercial polypropylene (type MOPLEN ® FLF20) admixed with 0.2% by weight of a mixture of ANOX® 20 and calcium stearate powders (ratio 1:1), analogous to that used in example 1, was prepared.

By operating according to the same procedure, a sample of the same polymer, admixed with 0.2% by weight of granules obtained from example 1, previously ground, was prepared.

The resulting samples were subjected to repeated extrusion through a BRABENDER type laboratory extruder, at a screw speed of 50 rpm and a temperature profile of 190°C, 235°C, 270°C and 270°C.

In Table II below the Yellowing Index (YI) and the Melt Flow Index (MFI) of both polymer samples are reported, which were measured after the first, the third and the fifth extrusion runs. It can be observed that the granulation of the additives by means of the process according to the present invention is substantially immaterial as regards the performance thereof.

### EXAMPLE 12

By operating in accordance with example 11, a sample of commercial polypropylene (MOPLEN® FLF20) admixed with 0.1 % by weight of ANOX® 20 powder, analogous to those used in example 9, and a sample of the same polymer admixed with the same amount of granules from example 9, previously ground, were extruded.

The YI and MFI values of both polymer samples, as measured after the first, the third and the fifth extrusion run are reported in Table III below. As in example 11, the granulation of the additives had no influence on their performance.

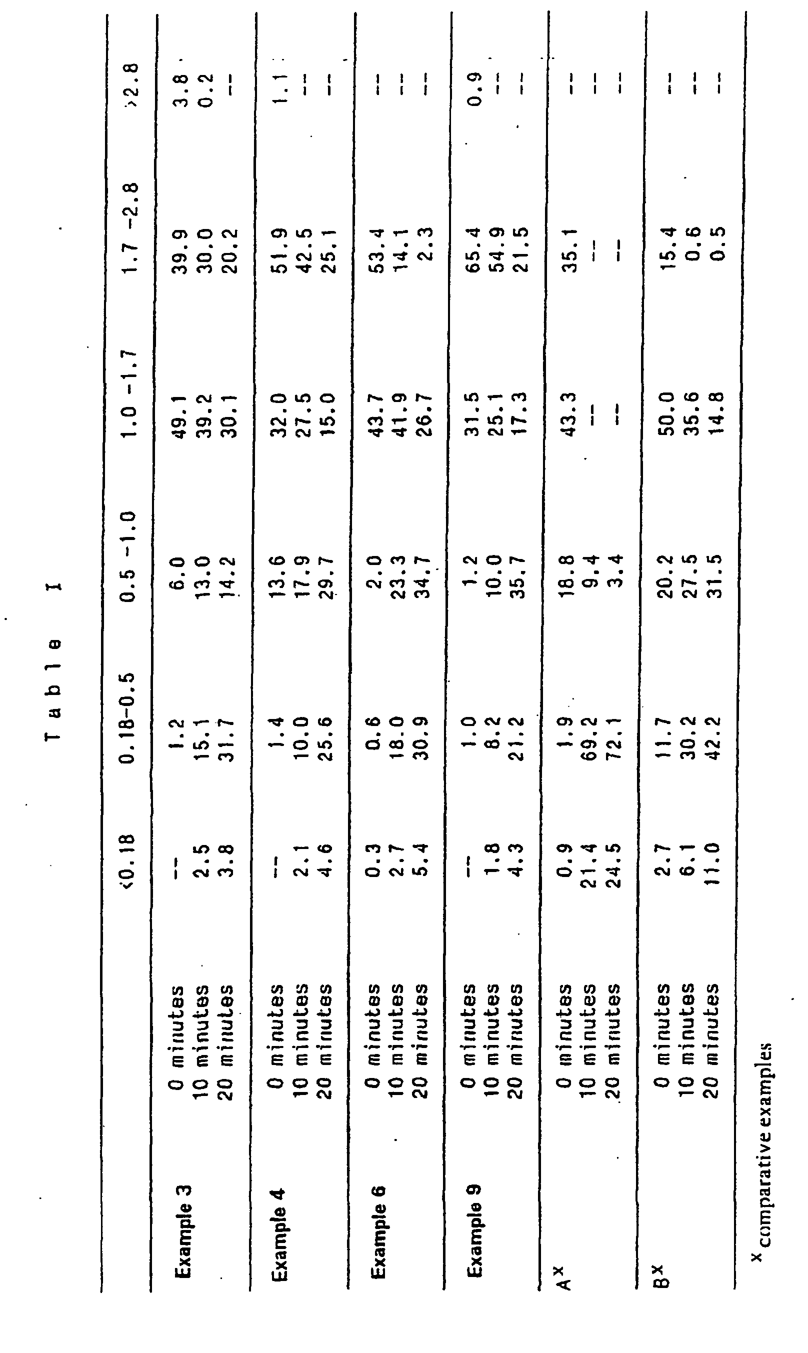

**TABLE II**

| | Powders^{x} | Granules |
|---|---|---|
| YI - 1 ^{st} extrusion | -2.5 | -2.6 |
| YI - 3^{rd} extrusion | -0.8 | -1.3 |
| YI - 5^{th} extrusion | 0.7 | 0.3 |
| MFI - 1^{st} extrusion | 20.7 | 20.6 |
| MFI - 3^{rd} extrusion | 29.0 | 28.8 |
| MFG - 5^{th} extrusion | 36.0 | 36.0 |

| | | |
|---|---|---|
| ^{x} Comparative examples | | |

**TABLE III**

| | Powders^{x} | Granules |
|---|---|---|
| YI - 1^{st} extrusion | -1.8 | -1.6 |
| YI - 3^{rd} extrusion | 2.2 | 2.9 |
| YI - 5^{th} extrusion | 5.9 | 5.7 |
| MFI - 1^{st} extrusion | 15.7 | 15.5 |
| MFI - 3^{rd} extrusion | 19.0 | 18.4 |
| MFI - 5^{th} extrusion | 23.0 | 22.2 |

| | | |
|---|---|---|
| ^{x} Comparative examples | | |

## Claims

1. Process for granulating powdery organic and/or inorganic antiacid additives for polymers in the presence of tetrakis-[3-(3,5-di-tert.-butyl-4-hydroxyphenyl)-propionyl-oxymethyl]-methane, wherein said tetrakis-[3-(3,5-di-tert.-butyl-4-hydroxyphenyl)-propionyl-oxymethyl]-methane is present in both amorphous and crystalline form with the crystalline form prevailing over the amorphous form in the granulated product, by using pressure and/or heat,
**characterized in that**
the tetrakis-[3-(3,5-di-tert.-butyl-4-hydroxyphenyl)-propionyl-oxymethyl]-methane is present in its amorphous form in an amount, being at least equal to the weight percentage required to be in the molten state or if exclusively crystalline tetrakis-[3-(3,5-di-tert.-butyl-4-hydroxyphenyl)-propionyl-oxymethyl]-methane is used the process is carried out at a temperature of 110°C to 125°C and with contact times such that at least that amount of said compound is in the molten state which is required for said process, and
the granulation is carried out in the presence of at least 1% by weight of said tetrakis-[3-(3,5-di-tert.-butyl-4-hydroxyphenyl)-propionyl-oxymethyl]-methane in the molten state, based on the weight of the powder mixture to be granulated, homogeneously distributed throughout the powder mass.

2. Process for granulating powdery tetrakis-[3-(3,5-di-tert.-butyl-4-hydroxyphenyl)-propionyl-oxymethyl]-methane, wherein said tetrakis-[3-(3,5-di-tert.-butyl-4-hydroxyphenyl)-propionyl-oxymethyl]-methane is present in both amorphous and crystalline form with the crystalline form prevailing over the amorphous form in the granulated product, by using pressure and/or heat,
**characterized in that**
the tetrakis-[3-(3,5-di-tert.-butyl-4-hydroxyphenyl)-propionyl-oxymethyl]-methane is present in its amorphous form in an amount, being at least equal to the weight percentage required to be in the molten state or if exclusively crystalline tetrakis-[3-(3,5-di-tert.-butyl-4-hydroxyphenyl)-propionyl-oxymethyl]-methane is used the process is carried out at a temperature of 110°C to 125°C and with contact times such that at least that amount of said compound is in the molten state which is required for said process, and
the granulation is carried out in the presence of at least 1% by weight of said tetrakis-[3-(3,5-di-tert.-butyl-4-hydroxyphenyl)-propionyl-oxymethyl]-methane in the molten state, based on the weight of the powder mixture to be granulated, homogeneously distributed throughout the powder mass.

3. Process according to any one of the claims 1 and 2, in which at least 5, and particularly at least 10% by weight of molten tetrakis-[3-(3,5-di-tert.-butyl-4-hydroxyphenyl)-propionyl-oxymethyl]-methane based on the weight of the powder mixture to be granulated are employed.

4. Process according to any one of claims 1 to 3, in which the process where the tetrakis-[3-(3,5-di-tert.-butyl-4-hydroxyphenyl)-propionyloxymethyl]-methane is present in its amorphous form is carried out at a temperature higher than the glass transition temperature (T_{g}) of said amorphous form but lower than the melting temperature of said compound in crystalline form and under conditions in which at least 1, preferably at least 5, and more preferably at least 10% by weight of said molten compound is present.

5. Process according to any one of claims 1 to 4, in which the granulation is effected by means of an extruder.

6. Process according to any one of claims 1 to 5, in which the antiacid additive is selected from metal stearates, oxides, carbonates and mixtures thereof.

7. Granular forms of organic and/or inorganic antiacid additives for polymers and/or of tetrakis-[3-(3,5-di-tert.-butyl-4-hydroxyphenyl)-propionyl-oxymethyl]-methane, obtainable by the process of any one of claims 1 to 6, wherein said tetrakis-[3-(3,5-di-tert.-butyl-4-hydroxy-phenyl)-propionyl-oxymethyl]-methane is present in both amorphous and crystalline form with the crystalline form prevailing over the amorphous form in the granulated product.

8. Use of the granular forms according to claim 7 in the stabilization of organic polymers.

## Patentansprüche

1. Verfahren zum Granulieren von pulverförmigen organischen bzw. anorganischen säureneutralisierenden Additiven für Polymere in Gegenwart von Tetrakis-[3-(3,5-di-tert.-butyl-4-hydroxyphenyl)-propionyloxymethyl]-methan unter Anwendung von Druck bzw. Hitze, wobei dieses Tetrakis-[3-(3,5-di-tert.-butyl-4-hydroxyphenyl)-propionyl-oxymethyl]-methan im granulierten Produkt sowohl in amorpher als auch in kristalliner Form vorliegt, wobei die kristalline Form die amorphe Form überwiegt, **dadurch gekennzeichnet, dass** das Tetrakis-[3-(3,5-di-tert.-butyl-4-hydroxyphenyl)-propionyl-oxymethyl]-methan in seiner amorphen Form in einer Menge vorliegt, welche zumindest der Menge in Gewichtsprozent entspricht, welche im geschmolzenen Zustand vorliegen muss, oder dass das Verfahren bei einer Temperatur von 110° bis 125°C und mit Kontaktzeiten, so dass zumindest die Menge dieser Verbindung in dem geschmolzenen Zustand vorhanden ist, die für dieses Verfahren erforderlich ist, durchgeführt wird, falls ausschließlich kristallines Tetrakis-[3-(3,5-di-tert.-butyl-4-hydroxyphenyl)-propionyl-oxymethyl]-methan verwendet wird, und dass die Granulierung in Gegenwart von mindestens 1 Gew.-%, bezogen auf das Gewicht der zu granulierenden Pulvermischung, dieses homogen in der Pulvermasse verteilten Tetrakis-[3-(3,5-di-tert.-butyl-4-hydroxyphenyl)-propionyl-oxymethyl]-methans in geschmolzenem Zustand durchgeführt wird.

2. Verfahren zum Granulieren von pulverförmigem Tetrakis-[3-(3,5-di-tert.-butyl-4-hydroxyphenyl)-propionyl-oxymethyl]-methan unter Anwendung von Druck bzw. Hitze, wobei dieses Tetrakis-[3-(3,5-di-tert.-butyl-4-hydroxyphenyl)-propionyl-oxymethyl]-methan im granulierten Produkt sowohl in amorpher als auch in kristalliner Form vorliegt, wobei die kristalline Form die amorphe Form überwiegt, **dadurch gekennzeichnet, dass** das Tetrakis-[3-(3,5-di-tert.-butyl-4-hydroxyphenyl)-propionyl-oxymethyl]-methan in seiner amorphen Form in einer Menge vorliegt, welche zumindest der Menge in Gewichtsprozent entspricht, welche im geschmolzenen Zustand vorliegen muss, oder dass das Verfahren bei einer Temperatur von 110° bis 125°C und mit Kontaktzeiten, so dass zumindest die Menge dieser Verbindung in dem geschmolzenen Zustand vorhanden ist, die für dieses Verfahren erforderlich ist, durchgeführt wird, falls ausschließlich kristallines Tetrakis-[3-(3,5-di-tert.-butyl-4-hydroxyphenyl)-propionyl-oxymethyl]-methan verwendet wird, und dass die Granulierung in Gegenwart von mindestens 1 Gew.-%, bezogen auf das Gewicht der zu granulierenden Pulvermischung, dieses homogen in der Pulvermasse verteilten Tetrakis-[3-(3,5-di-tert.-butyl-4-hydroxyphenyl)-propionyl-oxymethyl]-methans in geschmolzenem Zustand durchgeführt wird.

3. Verfahren nach irgendeinem der Ansprüche 1 und 2, wobei mindestens 5 Gew.-%, und insbesondere mindestens 10 Gew.-% von geschmolzenem Tetrakis-[3-(3,5-di-tert.-butyl-4-hydroxyphenyl)-propionyl-oxymethyl]-methan, bezogen auf das Gewicht der zu granulierenden Pulvermischung, verwendet wird.

4. Verfahren nach irgendeinem der Ansprüche 1-3, wobei das Verfahren, bei dem das Tetrakis-[3-(3,5-di-tert.-butyl-4-hydroxyphenyl)-propionyl-oxymethyl]-methan in seiner amorphen Form vorliegt, bei einer Temperatur durchgeführt wird, die höher als die Glasübergangstemperatur (T_{g}) dieser amorphen Form ist, aber niedriger als die Schmelztemperatur dieser Verbindung in kristalliner Form ist, und unter Bedingungen, bei denen mindestens 1 Gew.-%, vorzugsweise mindestens 5 Gew.-%, und insbesondere mindestens 10 Gew.-% dieser geschmolzenen Verbindung vorliegen.

5. Verfahren nach irgendeinem der Ansprüche 1 bis 4, wobei die Granulierung mittels eines Extruders durchgeführt wird.

6. Verfahren nach irgendeinem der Ansprüche 1 bis 5, bei welchem das säureneutralisierende Additiv aus Metallstearaten, -oxiden, -carbonaten und Mischungen daraus ausgewählt wird.

7. Granuläre Formen aus organischen bzw. anorganischen säureneutralisierenden Additiven für Polymere bzw. von Tetrakis-[3-(3,5-di-tert.-butyl-4-hydroxyphenyl)-propionyl-oxymethyl]-methan, die durch ein Verfahren nach irgendeinem der Ansprüche 1 bis 6 hergestellt werden können, wobei dieses Tetrakis-[3-(3,5-di-tert.-butyl-4-hydroxyphenyl)-propionyloxymethyl]-methan im granulierten Produkt sowohl in amorpher als auch in kristalliner Form vorliegt, wobei die kristalline Form die amorphe Form überwiegt.

8. Verwendung der granulären Formen nach Anspruch 7 zur Stabilisierung von organischen Polymeren.

## Revendications

1. Procédé pour granuler des additifs antiacides organiques et/ou inorganiques en poudre pour polymères en présence de tétrakis-[3-(3,5-di-tert-butyl-4-hydroxyphényle)-propionyle-oxyméthylène]-méthane, dans lequel ledit tétrakis-[3-(3,5-di-tert-butyl-4-hydroxyphényle)-propionyle-oxyméthylène]-méthane est présent aussi bien sous forme amorphe que cristalline, la forme cristalline prévalant sur la forme amorphe dans le produit granulé, en utilisant de la pression et/ou de la chaleur,
**caractérisé en ce que**
le tétrakis-[3-(3,5-di-tert-butyl-4-hydroxyphényle)-propionyle-oxyméthylène]-méthane est présent sous sa forme amorphe dans une quantité qui est au moins égale au pourcentage en poids requis pour être en état fondu ou, si l'on utilise exclusivement du tétrakis-[3-(3,5-di-tert-butyl-4-hydroxyphényle)-propionyle-oxyméthylène]-méthane cristallin, le procédé est effectué à une température de 110° C à 125° C, et avec des temps de contact tels qu'au moins cette quantité de ce composé soit dans l'état fondu requis pour ledit procédé, et
la granulation est réalisée en présence d'au moins 1% en poids dudit tétrakis-[3-(3,5-di-tert-butyl-4-hydroxyphényle)-propionyle-oxyméthylène]-méthane en état fondu, par rapport au poids du mélange de la poudre qui va être granulé, réparti de façon homogène dans toute la masse de la poudre.

2. Procédé pour granuler du tétrakis-[3-(3,5-di-tert-butyl-4-hydroxyphényle)-propionyle-oxyméthylène]-méthane en poudre, dans lequel ledit tétrakis-[3-(3,5-di-tert-butyl-4-hydroxyphényle)-propionyleoxyméthylène]-méthane est présent aussi bien sous forme amorphe que cristalline, la forme cristalline prévalant sur la forme amorphe dans le produit granulé, en utilisant de la pression et/ou de la chaleur,
**caractérisé en ce que**
le tétrakis-[3-(3,5-di-tert-butyl-4-hydroxyphényle)-propionyle-oxyméthylène]-méthane est présent sous sa forme amorphe dans une quantité qui est au moins égale au pourcentage en poids requis pour être en état fondu ou, si l'on utilise exclusivement du tétrakis-[3-(3,5-di-tert-butyl-4-hydroxyphényle)-propionyle-oxyméthylène]-méthane cristallin, le procédé s'effectue à une température de 110° C à 125° C avec des temps de contact tels qu'au moins cette quantité de ce composé soit dans l'état fondu requis pour ledit procédé, et
la granulation est réalisée en présence d'au moins 1% en poids dudit tétrakis-[3-(3,5-di-tert-butyl-4-hydroxyphényle)-propionyle-oxyméthylène]-méthane en état fondu, par rapport au poids du mélange en poudre qui va être granulé, réparti de façon homogène dans toute la masse de la poudre.

3. Procédé selon l'une ou l'autre des revendications 1 et 2, dans lequel au moins 5%, et spécialement au moins 10% en poids de tétrakis-[3-(3,5-di-tert-butyl-4-hydroxyphényle)-propionyle-oxyméthylène]-méthane fondu sont utilisés par rapport au poids du mélange en poudre qui va être granulé.

4. Procédé selon l'une ou l'autre des revendications 1 à 3, dans lequel le procédé où le tétrakis-[3-(3,5-di-tert-butyl-4-hydroxyphényle)-propionyleoxyméthylène]-méthane est présent sous sa forme amorphe s'effectue à une température supérieure à celle de la température de transition vitreuse (T_{g}) de ladite forme amorphe mais inférieure à la température de fusion dudit composé sous forme cristalline et dans des conditions dans lesquelles est présent au moins 1%, préférablement au moins 5%, et plus préférablement encore 10% en poids dudit composé fondu.

5. Procédé selon l'une ou l'autre des revendications 1 à 4, dans lequel la granulation est réalisée au moyen d'une presse d'extrusion.

6. Procédé selon l'une ou l'autre des revendications 1 à 5, dans lequel l'additif antiacide est choisi entre les stéarates, les oxydes, les carbonates métalliques et le mélange de ceux-ci.

7. Formes granulaires d'additifs antiacides organiques et/ou inorganiques pour polymères et/ou de tétrakis-[3-(3,5-di-tert-butyl-4-hydroxyphényle)-propionyle-oxyméthylène]-méthane, s'obtenant par le procédé de l'une ou l'autre des revendications 1 à 6, dans lesquelles ledit tétrakis-[3-(3,5-di-tert-butyl-4-hydroxyphényle)-propionyle-oxyméthylène]-méthane est présent aussi bien sous forme amorphe que cristalline, la forme cristalline prévalant sur la forme amorphe dans le produit granulé.

8. Utilisation des formes granulaires selon la revendication 7 dans la stabilisation de polymères organiques.
